# EUROPÄISCHE PATENTSCHRIFT

(11) **EP 3 284 162 B1**
(45) Veröffentlichungstag und Bekanntmachung des Hinweises auf die Patenterteilung: **11.03.2020**
(21) Anmeldenummer: 16719779.7
(22) Anmeldetag: 05.04.2016
(51) Int. Cl.: H01R 13/648, H01R 39/64, H01R 39/24, H02K 11/40

(54) **ABLEITUNGSEINRICHTUNG**
DISCHARGE DEVICE
DISPOSITIF DE DÉCHARGE

(30) Priorität: 13.04.2015 DE 102015206520
(43) Veröffentlichungstag der Anmeldung: 21.02.2018
(73) Patentinhaber: Schunk Transit Systems GmbH, 35435 Wettenberg (DE)
(72) Erfinder: PFEFFER, Daniel, 35325 Mücke (DE); CASTELLANOS, Robert Noe', 35396 Gießen (DE)
(74) Vertreter: advotec.
(86) Internationale Anmeldenummer: PCT/EP2016/057396
(87) Internationale Veröffentlichungsnummer: WO 2016/165973

(56) Entgegenhaltungen:
- EP-A1- 1 736 621
- DE-A1-102009 004 060
- DE-U1-202011 106 899
- US-A1- 2010 187 946

## Beschreibung

Die Erfindung betrifft eine Ableitungseinrichtung zur Ableitung elektrostatischer Ladung von einer Welle, umfassend einen ringförmigen Halter und eine Leiteranordnung, wobei die Leiteranordnung zumindest einen, an dem Halter angeordneten, biegeelastisch ausgebildeten Leiter umfasst, wobei der Leiter aus einer Kohlenstofffaseranordnung gebildet ist.

Insbesondere zur Ableitung elektrostatischer Ladungen von Wellen mit vergleichsweise großen Durchmessern werden regelmäßig ringförmige Ableitungseinrichtungen eingesetzt. Die aus dem Stand der Technik bekannten ringförmigen Ableitungseinrichtungen umgeben eine Welle umfänglich, wobei an der Ableitungseinrichtung Kohlenstofffasern, beispielsweise bündelförmig, angeordnet sind und mit ihren feinen Enden an einem Umfang der rotierenden Welle entlang streichen und diese so elektrisch kontaktieren.

Aus der US 7,193,836 ist eine Ableitungseinrichtung zur Ableitung elektrostatischer Ladung von einer Welle bekannt, bei der eine Kohlenstofffaseranordnung aus einer Vielzahl von Filamenten an einem Halter angeordnet ist, der ringförmig ausgebildet und koaxial zur Welle angeordnet ist. Zur Ausbildung eines Berührungskontakts mit der Welle sind Wellenkontaktabschnitte der einzelnen Filamente normal zum Wellenumfang ausgerichtet. Ein Berührungskontakt zwischen den Filamenten und dem Wellenumfang ergibt sich daher lediglich an den axialen Enden der Filamente. Aufgrund der Anordnung der Filamente normal zum Wellenumfang ergibt sich je nach Drehrichtung der Welle eine Neigung der Filamente in die Drehrichtung. Insbesondere bei einer Änderung der Drehrichtung der Welle werden die Filamente in die entgegengesetzte Richtung geneigt. Dies führt dazu, dass bei häufigen Richtungswechseln die Filamente brechen können und die Kohlenstofffaseranordnung aufspleißt. Eine elektrische Kontaktierung der Welle ist dann nicht mehr in der gewünschten Weise sichergestellt.

Aus der DE 20 2011 106 899 U1 ist eine Ableitungseinrichtung bekannt, bei der Kohlenstofffasern zwischen zwei Zugfedern an einem Halter angeordnet und in Art eines Geigenbogens aufgespannt sind. Enden der Kohlenstofffasern sind an sogenannten Krafteinleitungen gebündelt und in Ösen der Zugfedern eingehängt. Die Kohlenstofffasern sind tangential relativ zu einer Welle an diese angelegt und ein Leiter zur Ableitung elektrischer Ladungen ist jeweils an den Krafteinleitungen befestigt.

Der vorliegenden Erfindung liegt die Aufgabe zugrunde, eine Ableitungseinrichtung vorzuschlagen, die eine sichere Kontaktierung mit einem vergleichsweise großen Wellenumfang bei kleinem Bauraum ermöglicht.

Diese Aufgabe wird durch eine Ableitungseinrichtung mit den Merkmalen des Anspruchs 1 gelöst.

Die erfindungsgemäße Ableitungseinrichtung zur Ableitung elektrostatischer Ladungen von einer Welle, umfasst einen ringförmigen Halter und eine Leiteranordnung, wobei die Leiteranordnung zumindest einen, an dem Halter angeordneten biegeelastisch ausgebildeten Leiter umfasst, wobei der Leiter aus einer Kohlenstofffaseranordnung gebildet ist, wobei Enden des Leiters jeweils in dem Halter aufgenommen sind, wobei die Leiteranordnung zumindest zwei sich quer zu einer Wellenlängsachse erstreckende Leiterabschnitte aufweist, wobei die Leiterabschnitte jeweils einen Wellenkontaktabschnitt aufweisen, wobei die Wellenkontaktabschnitte zusammen eine Kontaktanordnung zur Kontaktierung mit zwei in einer Wellenkontaktebene W angeordneten Umfangskontaktbereichen eines Wellenumfangs ausbilden, derart, dass die Wellenkontaktabschnitte bei Kontakt zum Wellenumfang tangential zum Wellenumfang angeordnet sind.

Aufgrund der zumindest doppelten Ausführung der an Umfangskontaktbereichen des Wellenumfangs tangential am Wellenumfang anliegenden Wellenkontaktabschnitten ist die Ableitungseinrichtung drehrichtungsunabhängig ausgebildet. Kohlenstofffasern der Kohlenstofffaseranordnung weisen kein freies Ende auf, welches mit dem Wellenumfang kontaktiert wäre. Vielmehr ist der Leiter so an dem ringförmigen Halter angeordnet, dass der Leiter tangential zum Wellenumfang in Art einer Kreistangente verläuft. Insbesondere dadurch, dass beide Enden des Leiters in dem Halter aufgenommen sind, kann auch verhindert werden, dass sich der Leiter mit einem Ende in Richtung einer Drehrichtung ausrichtet. Eine drehrichtungsabhängige Bewegung des Leiters und ein Aufspleißen an einem Ende kann so verhindert werden. Gleichwohl ist der Leiter biegeelastisch und kann sich an den Wellenumfang anschmieden, wodurch eine verlässliche Kontaktierung bei einer gleichzeitig verlängerten Lebensdauer der Ableitungseinrichtung ermöglicht wird.

In einer Ausführungsform der Ableitungseinrichtung können die Leiterabschnitte über den Leiter miteinander verbunden sein. Ein Leiter kann dann beispielsweise zwei oder mehr Leiterabschnitte ausbilden. Der Leiter kann dann an dem ringförmigen Halter so befestigt sein, dass der Leiter nur in bestimmten Bereichen bzw. an den Leiterabschnitten mit dem Wellenumfang in Kontakt gelangt. So kann die Ableitungseinrichtung dann auch alleine einen einzigen Leiter aufweisen, was ein eventuell erforderliches Auswechseln des Leiters wesentlich vereinfacht. Es ist aber auch denkbar, dass die Ableitungseinrichtung mehrere Leiter mit jeweils zwei oder mehr Leiterabschnitten aufweist.

In einer weiteren Ausführungsform können die Leiterabschnitte von jeweils einem Leiter ausgebildet sein. In diesem Fall ist dann jeder der zumindest zwei Leiterabschnitte von einem eigenen Leiter ausgebildet. Wenn ein Leiterabschnitt erneuert werden muss, müssen dann nicht alle Leiterabschnitte erneuert werden.

Die Enden des Leiters können jeweils in einem Ankerlager des Halters aufgenommen sein. Dabei können dann die Enden an den jeweiligen Ankerlagern fest fixiert sein.

Zumindest ein Ankerlager kann so ausgebildet sein, dass das Ende in dem Ankerlager durch Klemmen fixiert ist. Dies kann beispielsweise dadurch erfolgen, dass der Leiter mittels einer Schraube geklemmt wird. Optional kann der Leiter auch mit einem Keil oder einer Spannzange durch Klemmen an dem Halter fixiert sein. Dadurch wird es möglich, eine Länge des Leiters an den Wellenumfang anzupassen.

Ein erstes Ende des Leiters kann an einem Spannanker und ein zweites Ende des Leiters an einem Festanker des Halters befestigt sein, derart, dass in dem Leiter in Längsrichtung eine Vorspannung ausbildbar ist. Optional ist es natürlich auch möglich, dass der Leiter zwischen zwei Spannankern gespannt ist. Der Festanker kann beispielsweise dadurch ausgebildet werden, dass ein Ende des Leiters dicker als der Leiterabschnitt ausgeführt ist. Das Ende kann dann an dem Festanker einfach formschlüssig, beispielsweise durch Einhängen, befestigt sein. Nach einer Befestigung des Leiters an dem Festanker kann eine Spannkraft auf den Leiter ausgeübt werden, wobei in dem Spannanker beispielsweise ein Klemmen des Leiters bzw. des ersten Endes erfolgen kann. So kann auch eine Vorspannung in dem Leiter ausgebildet werden. Wenn die Leiter so an dem ringförmigen Halter angeordnet sind, dass gegenüberliegende Leiterabschnitte einen etwas kleineren Relativabstand aufweisen als ein Wellendurchmesser, kann von den Leitern bzw. Leiterabschnitten eine Federkraft auf den Wellenumfang im Bereich der Wellenkontaktabschnitte bzw. Leiterabschnitte bewirkt werden, wodurch eine besonders sichere Kontaktierung des Wellenumfangs möglich ist.

Alternativ kann ein erstes Ende des Leiters an einem Losanker und ein zweites Ende des Leiters an einem Festanker des Halters befestigt sein, derart, dass der Leiter in Längsrichtung bewegbar ist. Der Losanker kann beispielsweise eine einfache Bohrung in dem Halter sein, in die der Leiter lose eingelegt oder eingesteckt ist. Der Leiter ist dann in seiner Längsrichtung bewegbar. Wenn der Leiter zumindest teilweise biegesteif ist, beispielsweise dadurch, dass der Leiter mit einer Beschichtung aus pyrolytisch abgeschiedenem Kohlenstoff versehen ist, kann der Leiter eine Federkraft auf die Welle bewirken und ist durch seine Bewegbarkeit in dem Losanker weitestgehend flexibel. Auch ist der Leiter dann besonders einfach auszutauschen.

Um ein vereinfachtes Fixieren bzw. eine einfache Montage des Leiters an dem ringförmigen Halter zu ermöglichen, kann ein Ende des Leiters mit einer Seilhülse eingefasst sein. Vorzugsweise können beide Enden des Leiters mit jeweils einer Seilhülse eingefasst sein. Die Seilhülse kann die Kohlenstofffasern des Leiters an dem Ende klemmen. Auch kann die Seilhülse dazu dienen, den Leiter einfach an dem Halter formschlüssig zu befestigen. So kann an dem Halter eine Bohrung vorgesehen sein, durch die der Leiter, jedoch nicht die Seilhülse hindurchgeführt werden kann.

Zur Kontaktierung von jeweils voneinander in einer Umfangsrichtung äquidistant beabstandeten, in der Wellenkontaktebene W angeordneten Umfangskontaktbereichen können zwei, bevorzugt drei, besonders bevorzugt vier oder mehr Leiterabschnitte ausgebildet sein. So kann bei beispielsweise drei Leiterabschnitten ein Mittelpunktswinkel von einem Leiterabschnitt jeweils zum benachbarten Leiterabschnitt bezogen auf eine Wellenachse 120° betragen. Es kann dann auch immer sichergestellt werden, dass die Ableitungseinrichtung relativ zum Wellenumfang koaxial angeordnet ist. Eine Montage der Ableitungseinrichtung an den Wellenumfang wird dann wesentlich vereinfacht, da sich die Ableitungseinrichtung selbst zentriert.

Der Leiterabschnitt kann durch einen im Halter gerade ausgebildeten Führungskanal verlaufen, wobei ein Kanaldurchmesser größer sein kann als ein Leiterdurchmesser. Der Führungskanal kann eine einfache Bohrung sein, die in Art einer Kreissehne durch den ringförmigen Halter, der beispielsweise aus Aluminium oder einem anderen geeigneten Metall bestehen kann, verläuft. Dabei kann der ringförmige Halter ein Kreisring sein. Der Führungskanal kann aus einem inneren Kreisringdurchmesser aus- und wieder eintreten, so dass der Führungskanal durch zwei Abschnitte des Kreisrings verläuft. Der Führungskanal kann aber auch eine Nut sein, die in den Kreisring eingearbeitet ist, wobei die Nut den Kreisring zumindest stellenweise so durchbrechen kann, dass der Leiter einen Innendurchmesser des Kreisrings durchspannt und dort den Leiterabschnitt ausbildet. Wenn der Kanaldurchmesser größer ist als ein Leiterdurchmesser, kann der Leiter auch besonders einfach in den Führungskanal eingeführt werden und sich dort flexibel bei Bedarf bewegen.

Der Halter ist besonders einfach ausbildbar, wenn er als ein einstückiger Ring ausgebildet ist. Ein einstückiger Ring bzw. ein Kreisring kann leicht durch Drehen hergestellt werden. Ein derartiger Halter eignet sich besonders zur Montage an freien Wellenenden.

Optional kann der Halter auch als ein mehrteiliger Ring aus miteinander verbundenen Ringsegmenten ausgebildet sein. Gerade bei geschlossenen Wellenabschnitten wird es dann möglich, einen ringförmigen Halter zu montieren. Der mehrteilige Ring kann je nach Anzahl der Leiterabschnitte aus Ringhälften, Ringdrittel, Ringviertel usw. ausgebildet sein. Diese Ringsegmente können mittels Schrauben- oder Stiftverbindungen unmittelbar miteinander verbunden werden. Auch ist es möglich, die Ringsegmente direkt, ohne eine unmittelbare Verbindung an beispielsweise einem Lagerbock zu montieren und so den ringförmigen Halter auszubilden. Eine Ableitung elektrostatischer Ladung kann dann unmittelbar von dem Halter auf den Lagerbock erfolgen.

Der Halter kann aber auch als ein Gehäusedeckel ausgebildet oder mit einem Gehäusedeckel verbunden sein. Dies ist besonders vorteilhaft für den praktischen Einsatz der Ableitungseinrichtung wie auch zur Reduzierung eines Wartungsaufwands in Verbindung mit einem Austausch eines Leiters der Ableitungseinrichtung.

Die Kohlenstofffaseranordnung des Leiters kann ein Fasergeflecht aufweisen, das mit einer Beschichtung aus pyrolytisch abgeschiedenem Kohlenstoff versehen ist, so dass die Beschichtung aus Pyrokohlenstoff nicht nur dazu dient, eine Kontaktoberfläche des Leiters zu verdichten, sondern darüber hinaus auch eine das Fasergeflecht abstützende Hülle auszubilden, die im Zusammenwirken mit dem Fasergeflecht für die gewünschten biegeelastischen Eigenschaften des Leiters sorgt, der eine Biegesteifigkeit aufweist, die insbesondere auch durch die Dicke der Beschichtung beeinflussbar ist.

Als besonders vorteilhaft hat sich die Ausbildung der Beschichtung durch Anwendung eines CVI-Verfahrens (Chemical Vapor Infiltration) herausgestellt, da dieses Verfahren nicht nur für die gewünschte Oberflächenbeschichtung, sondern darüber hinaus auch für die Ausbildung von Bindungskräften zwischen einzelnen Filamenten des Fasergeflechts sorgt.

Als besonders vorteilhaft erweist es sich, wenn das Fasergeflecht aus Umhüllungen einer sich in Längsrichtung des Leiters erstreckenden unidirektionalen Faserstrangs ausgebildet ist, der im Wesentlichen parallel zueinander verlaufende Filamente aufweist, so dass durch Faserzwischenräume Kapillare ausgebildet werden, welche die Ausnutzung von Kapillareffekten zum Abtransport von Fett oder Feuchtigkeit von dem Wellenumfang ermöglichen.

Zur Erhöhung der Biegesteifigkeit des Leiters ist es vorteilhaft, wenn das Fasergeflecht mit einer Harzmatrix versehen ist.

Nachfolgend wird eine vorteilhafte Ausführungsform der Erfindung anhand der Zeichnungen näher erläutert.

Es zeigen:
- **Fig. 1**: eine perspektivische Ansicht einer Ableitungseinrichtung;
- **Fig. 2**: die Ableitungseinrichtung in einer Vorderansicht;
- **Fig. 3**: die Ableitungseinrichtung in einer Seitenansicht von links;
- **Fig. 4**: die Ableitungseinrichtung in einer Schnittansicht entlang einer Linie IV-IV aus **Fig. 3****;**
- **Fig. 5**: die Ableitungseinrichtung in einer Schnittansicht entlang einer Linie V-V aus **Fig. 2****.**

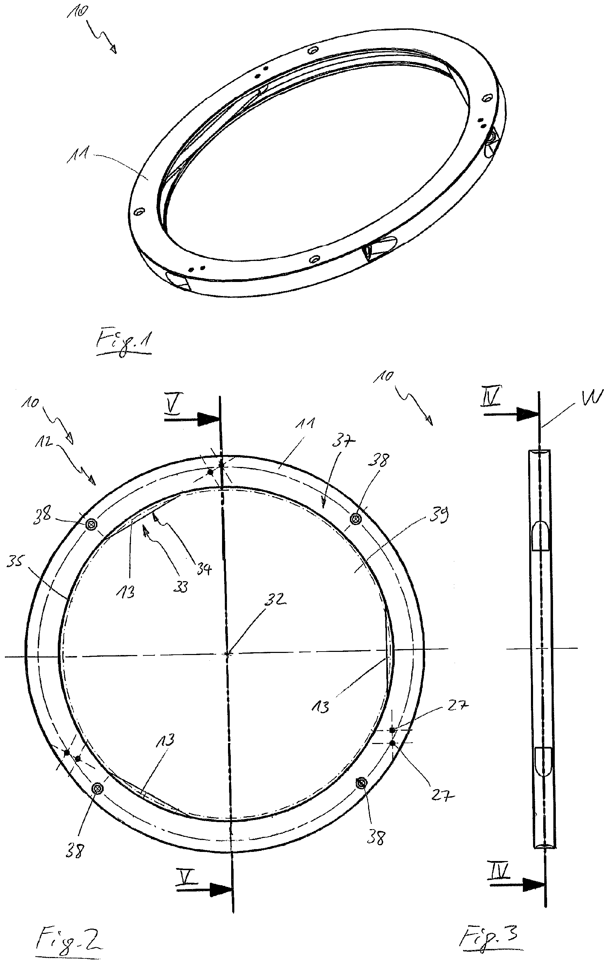

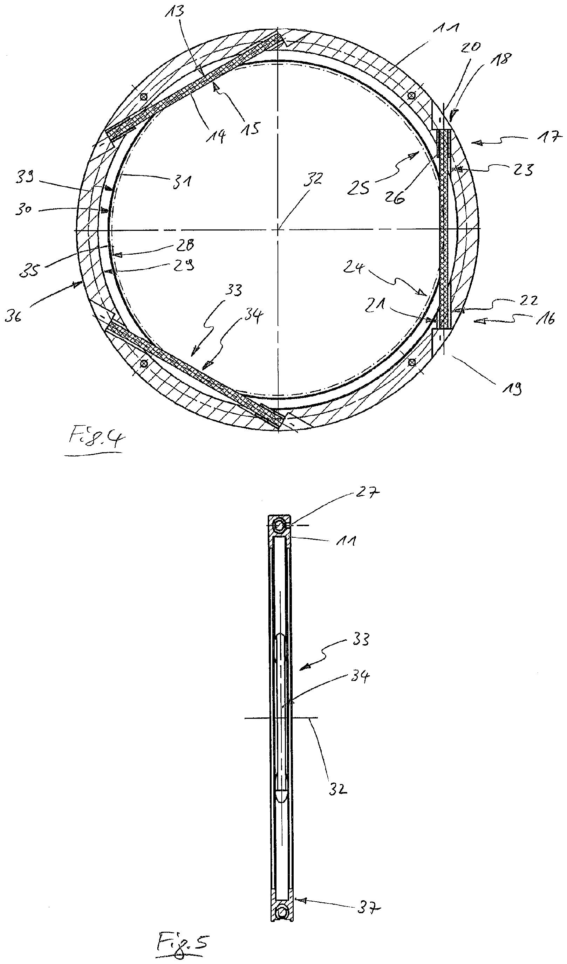

Eine Zusammenschau der **Fig. 1** bis **5** zeigt eine Ableitungseinrichtung 10, die aus einem ringförmigen Halter 11 aus Aluminium und einer Leiteranordnung 12 ausgebildet ist. Die Leiteranordnung 12 umfasst drei biegeelastisch ausgebildete Leiter 13. Die Leiter 13 sind jeweils aus Kohlenstofffasern 14 in einem Fasergeflecht 15 ausgebildet. Der Leiter 13 weist ein erstes Ende 16 und ein zweites Ende 17 auf. Der Leiter 13 ist in einem geraden Führungskanal 18, welcher in dem Halter 11 ausgebildet ist, angeordnet. Der Längsachse 19 des Leiters 13 fluchtet dabei mit einer Kanalachse 20 des Führungskanals 18. Der Führungskanal 18 ist durch eine Durchgangsbohrung 21 mit jeweils einem ersten Bohrungsabschnitt 22 und einem zweiten Bohrungsabschnitt 23 ausgebildet. Der erste Bohrungsabschnitt 22 bildet einen Spannanker 24 und der zweite Bohrungsabschnitt 23 einen Festanker 25 für den Leiter 13 aus.

An dem zweiten Ende 17 des Leiters 13 ist eine Seilhülse 26 fest angeordnet bzw. geklemmt, wobei die Seilhülse 26 an dem Festanker 25 formschlüssig fixiert ist. Das erste Ende 16 des Leiters 13 ist in dem Spannanker 24 mittels zweier Schrauben 27 durch Klemmen fixiert.

Der Halter 11 weist an einem Innendurchmesser 28 eine umlaufende innere Nut 29 auf. Der Innendurchmesser 28 ist geringfügig größer als ein hier andeutungsweise dargestellter Wellendurchmesser 30 einer Welle 39. Zwischen dem Innendurchmesser 28 und dem Wellendurchmesser 30 ist ein Spalt 31 ausgebildet. Der Halter 11 ist folglich koaxial zu einer Wellenlängsachse 32 im montierten Zustand angeordnet. Die Leiteranordnung 12 bzw. die Leiter 13 bilden somit Leiterabschnitte 33 aus, die sich quer zu der Wellenlängsachse 32 erstrecken. Die Leiterabschnitte 33 weisen jeweils einen Wellenkontaktabschnitt 34 auf, die hier nicht näher dargestellte Umfangskontaktbereiche eines andeutungsweise dargestellten Wellenumfangs 35 ausbilden. Die Wellenkontaktabschnitte 34 verlaufen in einer Wellenkontaktebene W, wobei die Wellenkontaktabschnitte 34 in einem Kontakt zu dem Wellenumfang 35 tangential zum Wellenumfang 35 angeordnet sind. Da die Leiter 13 biegeelastisch ausgebildet sind, können sich die Leiter 13 entgegen der hier dargestellten geradförmigen Ausrichtung entlang der Längsachse 19 zumindest teilweise bogenförmig verformen und an den Wellenumfang 35 anschmiegen. Die Leiter 13 bzw. die Leiterabschnitte 33 sind jeweils voneinander äquidistant beabstandet.

Ein Austausch einzelner Leiter 13 kann leicht durch Lösen der Schrauben 27 und Entnahme des Leiters 13 aus der Durchgangsbohrung 21 an einem Außendurchmesser 36 des Halters 11 erfolgen. In einer Kreisringfläche 37 des Halters 11 sind vier Durchgangsbohrungen 38 vorgesehen, über die der Halter 11 bzw. die Ableitungseinrichtung 10, beispielsweise an einem Lagerbock, durch Verschrauben einfach an dem Lagerbock montiert werden kann.

## Patentansprüche

1. Ableitungseinrichtung (10) zur Ableitung elektrostatischer Ladung von einer Welle (39), umfassend einen Halter (11) und eine Leiteranordnung (12), wobei die Leiteranordnung (12) zumindest einen an dem Halter (11) angeordneten biegeelastisch ausgebildeten Leiter (13) umfasst, wobei der Leiter (13) aus einer Kohlenstofffaseranordnung gebildet ist, und wobei der zumindest eine Leiter (13) einen Wellenkontaktabschnitt (34) aufweist, der bei Kontakt zum Wellenumfang (35) tangential zum Wellenumfang (35) angeordnet ist, **dadurch gekennzeichnet,**
**dass** der Halter (11) ringförmig ist und dass Enden (16, 17) des Leiters (13) jeweils in dem Halter (11) aufgenommen sind, wobei die Leiteranordnung (12) zumindest zwei sich quer zu einer Wellenlängsachse (32) erstreckende Leiterabschnitte (33) aufweist, wobei die Leiterabschnitte (33) jeweils einen Wellenkontaktabschnitt (34) aufweisen, wobei die zumindest zwei Wellenkontaktabschnitte (34) zusammen eine Kontaktanordnung zur Kontaktierung mit zumindest zwei in einer Wellenkontaktebene (W) angeordneten Umfangskontaktbereichen eines Wellenumfangs (35) ausbbilden.

2. Ableitungseinrichtung nach Anspruch 1,
**dadurch gekennzeichnet,**
**dass** die Leiterabschnitte (33) über den Leiter (13) miteinander verbunden sind.

3. Ableitungseinrichtung nach Anspruch 1,
**dadurch gekennzeichnet,**
**dass** die Leiterabschnitte (33) von jeweils einem Leiter (13) ausgebildet sind.

4. Ableitungseinrichtung nach einem der vorangehenden Ansprüche,
**dadurch gekennzeichnet,**
**dass** die Enden (16, 17) des Leiters (13) jeweils in einem Ankerlager des Halters (11) aufgenommen sind.

5. Ableitungseinrichtung nach Anspruch 4,
**dadurch gekennzeichnet,**
**dass** zumindest ein Ankerlager so ausgebildet ist, dass das Ende (16, 17) in dem Ankerlager durch Klemmen fixiert ist.

6. Ableitungseinrichtung nach Anspruch 4 oder 5,
**dadurch gekennzeichnet,**
**dass** ein erstes Ende (16) des Leiters (13) an einem Spannanker (24) und ein zweites Ende (17) des Leiters an einem Festanker (25) des Halters (11) befestigt ist, derart, dass in dem Leiter (13) in Längsrichtung eine Vorspannung ausbildbar ist.

7. Ableitungseinrichtung nach Anspruch 4 oder 5,
**dadurch gekennzeichnet,**
**dass** ein erstes Ende (16) des Leiters (13) an einem Losanker und ein zweites Ende (17) des Leiters an einem Festanker (25) des Halters (11) befestigt ist, derart, dass der Leiter (13) in Längsrichtung bewegbar ist.

8. Ableitungseinrichtung nach einem der Ansprüche 4 bis 7,
**dadurch gekennzeichnet,**
**dass** ein Ende (17) des Leiters (13) mit einer Seilhülse (26) eingefasst ist.

9. Ableitungseinrichtung nach einem der vorangehenden Ansprüche,
**dadurch gekennzeichnet,**
**dass** zwei, bevorzugt drei, besonders bevorzugt vier oder mehr Leiterabschnitte (33) zur Kontaktierung von jeweils voneinander in einer Umfangsrichtung äquidistant beabstandeten in der Wellenkontaktebene (W) angeordneten Umfangskontaktbereichen ausgebildet sind.

10. Ableitungseinrichtung nach einem der vorangehenden Ansprüche,
**dadurch gekennzeichnet,**
**dass** der Leiterabschnitt (33) durch einen im Halter (11) gerade ausgebildeten Führungskanal (18) verläuft, wobei ein Kanaldurchmesser größer ist als ein Leiterdurchmesser.

11. Ableitungseinrichtung nach einem der vorangehenden Ansprüche,
**dadurch gekennzeichnet,**
**dass** der Halter (11) als ein einstückiger Ring ausgebildet ist.

12. Ableitungseinrichtung nach einem der Ansprüche 1 bis 10,
**dadurch gekennzeichnet,**
**dass** der Halter (11) als ein mehrteiliger Ring aus miteinander verbundenen Ringsegmenten ausgebildet ist.

13. Ableitungseinrichtung nach einem der vorangehenden Ansprüche,
**dadurch gekennzeichnet,**
**dass** der Halter (11) als ein Gehäusedeckel ausgebildet oder mit einem Gehäusedeckel verbunden ist.

14. Ableitungseinrichtung nach einem der vorangehenden Ansprüche,
**dadurch gekennzeichnet,**
**dass** die Kohlenstofffaseranordnung des Leiters (13) ein Fasergeflecht (15) aufweist, das mit einer Beschichtung aus pyrolytisch abgeschiedenem Kohlenstoff versehen ist.

15. Ableitungseinrichtung nach Anspruch 14,
**dadurch gekennzeichnet,**
**dass** das Fasergeflecht (15) als Umhüllung einer sich in Längsrichtung des Leiters (13) erstreckenden unidirektionalen Faserstrangs ausgebildet ist.

16. Ableitungseinrichtung nach Anspruch 14 oder 15,
**dadurch gekennzeichnet,**
**dass** das Fasergeflecht (15) mit einer Harzmatrix versehen ist.

## Claims

1. A discharge device (10) for discharging electrostatic charges from a shaft (39), comprising a holder (11) and a conductor arrangement (12), said conductor arrangement (12) comprising at least one flexurally elastic conductor (13) arranged on the holder (11),
the conductor (13) being made of a carbon fiber arrangement, and the at least one conductor (13) having a shaft contact portion (34) which is arranged tangentially to the shaft circumference (35) upon contact with the shaft circumference (35),
**characterized in that**
that holder (11) is annular and that each end (16, 17) of the conductor (13) is accommodated in the holder (11), said conductor arrangement (12) comprising at least two conductor portions (33) extending transversely to a longitudinal shaft axis (32), said conductor portions (33) each comprising a shaft contact portion (34), the at least two shaft contact portions (34) together forming a contact arrangement for coming into contact with at least two circumferential contact areas of a shaft circumference (35), which are arranged in a shaft contact plane (W).

2. The discharge device according to claim 1,
**characterized in that**
the conductor portions (33) are connected to each other via the conductor (13).

3. The discharge device according to claim 1,
**characterized in that**
the conductor portions (33) are formed by a conductor (13) each.

4. The discharge device according to any one of the preceding claims,
**characterized in that**
the ends (16, 17) of the conductor (13) are each accommodated in an anchor bearing of the holder (11).

5. The discharge device according to claim 4,
**characterized in that**
at least one anchor bearing is realized such that the end (16, 17) is fixed in the anchor bearing via clamps.

6. The discharge device according to claim 4 or 5,
**characterized in that**
a first end (16) of the conductor (13) is fastened to a pre-tensioning anchor (24) and a second end (17) of the conductor is fastened to a dead-end anchor (25) of the support (11) in such a manner that a pre-tension is produced in the conductor (13) in the longitudinal direction.

7. The discharge device according to claim 4 or 5,
**characterized in that**
a first end (16) of the conductor (13) is fastened to a displaceable anchor and a second end (17) of the conductor is fastened to a dead-end anchor (25) of the holder (11) in such a manner that the conductor (13) can be moved in the longitudinal direction.

8. The discharge device according to any one of the claims 4 to 7,
**characterized in that**
an end (17) of the conductor (13) is cased with a rope socket (26).

9. The discharge device according to any one of the preceding claims,
**characterized in that**
two, preferably three, particularly preferred four or more, conductor portions (33) are formed for contacting circumferential contact areas which are arranged at equal distances to each other in a circumferential direction in the shaft contact plane (W).

10. The discharge device according to any one of the preceding claims,
**characterized in that**
the conductor section (33) extends through a straight guide channel (18) formed in the holder (11), a channel diameter being larger than a conductor diameter.

11. The discharge device according to any one of the preceding claims,
**characterized in that**
the holder (11) is formed as a one-piece ring.

12. The discharge device according to any one of the claims 1 to 10,
**characterized in that**
the holder (11) is formed as a multipart ring made of ring segments which are connected to each other.

13. The discharge device according to any one of the preceding claims,
**characterized in that**
the holder (11) is realized as a housing cover or is connected to a housing cover.

14. The discharge device according to any one of the preceding claims,
**characterized in that**
the carbon fiber arrangement of the conductor (13) comprises a fiber network (15) which is provided with a coating of pyrolytically deposited carbon.

15. The discharge device according to claim 14,
**characterized in that**
the fiber network (15) is realized as an envelope of a unidirectional fiber strand extending in the longitudinal direction of the conductor (13).

16. The discharge device according to claim 14 or 15
**characterized in that**
the fiber network (15) is provided with a resin matrix.

## Revendications

1. Dispositif (10) de décharge pour la décharge des charges électrostatique d'un arbre (39), le dispositif (10) de décharge comprenant un support (11) et une disposition (12) de conducteur, la disposition (12) de conducteur comprenant au moins un conducteur (13) élastique en flexion et disposé sur le support (11), le conducteur (13) étant fait d'une disposition de fibres de carbone, l'au moins un conducteur (13) ayant une partie (34) de contact d'arbre qui est disposé tangentiellement à la circonférence (35) d'arbre lorsqu'il est en contact avec la circonférence (35) d'arbre,
**caractérisé en ce que**
le support (11) est annulaire et que chaque extrémité (16, 17) du conducteur (13) est reçue dans le support (11), la disposition (12) de conducteur ayant au moins deux parties (33) de conducteur s'étendant transversalement à un axe (32) d'arbre longitudinal, chaque partie (33) de conducteur ayant une partie (34) de contact d'arbre, les au moins deux parties (34) de contact d'arbre formant ensemble une disposition de contact pour être mise en contact avec au moins deux zones de contact circonférentielles d'une circonférence (35) d'arbre disposées dans un plan (W) de contact d'arbre.

2. Dispositif de décharge selon la revendication 1,
**caractérisé en ce que**
les parties (33) de conducteur sont reliées les unes aux autres par le conducteur (13).

3. Dispositif de décharge selon la revendication 1,
**caractérisé en ce que**
les parties (33) de conducteur sont formées chacune par un conducteur (13).

4. Dispositif de décharge selon l'une quelconque des revendications précédentes,
**caractérisé en ce que**
les extrémités (16, 17) du conducteur (13) sont reçues chacune dans un palier d'ancrage du support (11).

5. Dispositif de décharge selon la revendication 4,
**caractérisé en ce qu'**
au moins un palier d'ancrage est réalisé de telle manière que l'extrémité (16, 17) est fixée dans le palier d'ancrage par serrage.

6. Dispositif de décharge selon la revendication 4 ou 5,
**caractérisé en ce qu'**
une première extrémité (16) du conducteur (13) est fixée à un ancrage (24) actif et une deuxième extrémité (17) du conducteur est fixée à un ancrage (25) passif du support (11) de telle manière qu'une précontrainte est produite dans le conducteur (13) dans la direction longitudinale.

7. Dispositif de décharge selon la revendication 4 ou 5,
**caractérisé en ce qu'**
une première extrémité (16) du conducteur (13) est fixée à un ancrage déplaçable et une deuxième extrémité (17) du conducteur est fixée à un ancrage (25) passif du support (11) de telle manière que le conducteur (13) peut être bougé dans la direction longitudinale.

8. Dispositif de décharge selon l'une quelconque des revendications 4 à 7,
**caractérisé en ce qu'**
une extrémité (17) du conducteur (13) est enveloppée par une douille (26) de câble.

9. Dispositif de décharge selon l'une quelconque des revendications précédentes,
**caractérisé en ce que**
deux, de préférence trois, de préférence particulière quatre ou plus, parties (33) de conducteur sont formées pour la mise en contact avec des zones de contact circonférentielles disposées de manière équidistant les unes aux autres dans une direction circonférentielle dans le plan (W) de contact d'arbre.

10. Dispositif de décharge selon l'une quelconque des revendications précédentes,
**caractérisé en ce que**
la partie (33) de conducteur s'étend au travers d'un canal (18) de guidage droit formé dans le support (11), un diamètre de canal étant plus grand qu'un diamètre de conducteur.

11. Dispositif de décharge selon l'une quelconque des revendications précédentes,
**caractérisé en ce que**
le support (11) est formé en tant que bague en une pièce.

12. Dispositif de décharge selon l'une quelconque des revendications 1 à 10,
**caractérisé en ce que**
le support (11) est formé en tant que bague en plusieurs pièces fait de segments de bague qui sont reliés les uns aux autres.

13. Dispositif de décharge selon l'une quelconque des revendications précédentes,
**caractérisé en ce que**
le support (11) est réalisé en tant que couvercle de boîtier ou est relié à un couvercle de boîtier.

14. Dispositif de décharge selon l'une quelconque des revendications précédentes,
**caractérisé en ce que**
la disposition de fibres de carbone du conducteur (13) a un réseau (15) de fibres qui est pourvu d'un revêtement de carbone déposé par pyrolyse.

15. Dispositif de décharge selon la revendication 14,
**caractérisé en ce que**
le réseau (15) de fibres est réalisé en tant qu'enveloppe d'un faisceau de fibres unidirectionnel s'étendant dans la direction longitudinale du conducteur (13).

16. Dispositif de décharge selon la revendication 14 ou 15
**caractérisé en ce que**
le réseau (15) de fibres est pourvu d'une matrice de résine.
